# EUROPEAN PATENT SPECIFICATION

(11) **EP 2 402 289 B1**
(45) Date of publication and mention of the grant of the patent: **05.04.2017**
(21) Application number: 09839586.6
(22) Date of filing: 09.02.2009
(51) Int. Cl.: C02F 1/46, C02F 1/469

(54) **HOT-WATER SUPPLY DEVICE**
HEISSWASSERVERSORGUNGSVORRICHTUNG
DISPOSITIF D'ALIMENTATION EN EAU CHAUDE

(43) Date of publication of application: 04.01.2012
(73) Proprietor: Panasonic Corporation, Kadoma-shi Osaka 571-8501 (JP)
(72) Inventor: Shigeru, Sasabe, Osaka 540-6207 (JP); Yasui, Keiko, Osaka 540-6207 (JP); Takemi, Oketa, Osaka 540-6207 (JP); Taisuke, Horiki, osaka 540-6207 (JP)
(74) Representative: Eisenführ Speiser
(86) International application number: PCT/JP2009/000511
(87) International publication number: WO 2010/089807

(56) References cited:
- WO-A2-00/64325
- JP-A- 4 122 320
- JP-A- 7 080 454
- JP-A- 2008 157 517
- JP-A- 2008 209 067
- JP-T- 2008 507 406

## Description

### [Technical Field]

The present intention relates to a technique for preventing scale from being generated in a pipe of a hot water supply apparatus such as an electric water heater and a heat pump hot water supply apparatus.

### [Background Technique]

Prior art document WO 00/64325 A2 discloses a household appliance using water, the household appliance providing reduction of water hardness. Specifically, a water supply system guides water from an external source, so that at least a portion of the supplied water is treated by a softening system including an electrochemical cell. The electrochemical cell is an active part of the water softening system. The softening system is provided in the form of a decalcifier device having an inlet as well as an outlet for supplying and discharging water. Besides the inlet and outlet a further duct is provided for draining water when the electrochemical cell is restored. This duct departs from the decalcifier and is connected to the suction pipe of a drain pump. A specific valve is arranged for being opened in a controlled manner, when draining of concentrated water is necessary. Restoration of the electrochemical cell, switching conditions of the valve and the operation of the drain pump are controlled by an overall control system.

As a further conventional technique for preventing scale from being generated in a pipe of a hot water supply apparatus, there is the following water softening technique using an ion-exchange resin (see JP2008-157517 and patent document 1 for example).

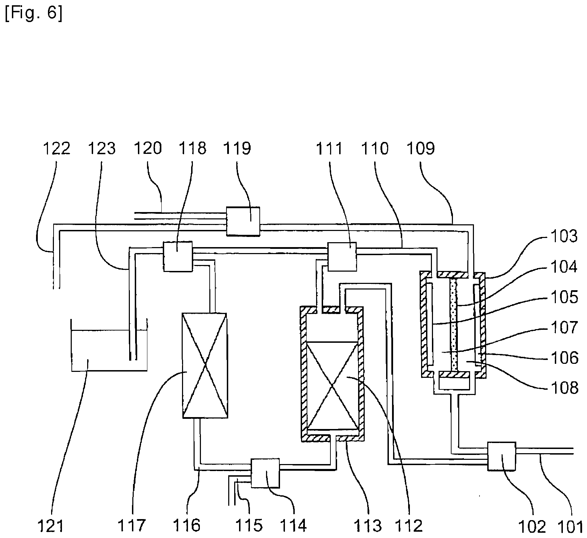

Fig. 6 is block diagram of a conventional hot water supply apparatus for presenting scale from being generated in a pipe.

In Fig. 6, a raw water supply pipe 101 is a water pipe through which water is supplied to a bath-hot water supply apparatus 117. The raw waster supply pipe 101 is connected to a lower portion of an electrolysis apparatus 103 and to an upper portion of a water-softening apparatus 113 through a three-way valve 102. The three-way valve 102 is switched such that water flows to a water-softening apparatus. 113 when obtaining water, and water flows to the electrolysis apparatus 103 when restoring water. The electrolysis apparatus 1.03 is divided into a positive pole chamber 107 and a negative pole chamber 108 by a porous diaphragm 104, e.g., an unglazed diaphragm. Electrodes 105 and 106 are disposed in these pole chambers, respectively.

An acid-Water outlet pipe 110 is connected to an upper portion of the positive pole chamber 107. The acid-water outlet pipe 110 is also connected to an upper portion of a water-softening apparatus 113 through the three-way valve 111. A positive ion-exchange resin 112 is charged into the water-softening apparatus, 113. The acid-water outlet pipe 110 is also connected to a water supply pipe 123 through a three-way valve 118. Waster is supplied to a bathtub 121 through the water supply pipe 123. A three-way valve 111 is switched such that water flows to the water-softening apparatus 113 at the time of restoration, and water flows to the water supply pipe 123 for the bathtub 121 when taking acid bathing in the bathtub 121.

An alkaline water outlet pipe 109 is connected to an upper portion of the negative pole chamber 108. The alkaline water outlet pipe 109 is also connected to a drain pipe 122 and a drinking water pipe 120 through a three-way valve 119. The three-way valve 119 is switched such that water flows to the drinking water pipe 120 when drinking alkaline water, and water is drained from the drain pipe 122 when not drinking alkaline water.

A drain pipe 115 is connected to a lower portion of the water-softening apparatus 113 through a three-way valve 114, and a bath-hot water supply apparatus 117 is connected to the lower portion of the water-softening apparatus 113 through a pipe 116.

In the above configuration, water passes through the raw water supply pipe 101, and when the water is obtained, the three-way valve 102 is switched, and water is supplied from the upper portion of the water-softening apparatus 113 into which the positive ion-exchange resin 112 is charged. Positive ion such as calcium and magnesium in water is replaced by hydrogen ion by the positive ion-exchange resin 112, and water is softened. The soft water is supplied to the bathtub 121 by the bath-hot water supply apparatus 117 through the pipes 116 and 123.

When the positive ion-exchange resin is restored, the three-way valve 102 is switched and water is supplied to the electrolysis apparatus 103. The electrolysis apparatus 103 is divided into the positive pole chamber 107 and the negative pole chamber 108 by the diaphragm 104, and the electrodes 105 and 106 are respectively disposed in these pole chambers. Direct voltage is applied between the electrodes 105 and 106, the three-way valve 111 is switched and acid water obtained by the positive pole chamber 107 is supplied from the upper portion of the water-softening apparatus 113. At that time, the three-way valve 114 is switched toward the drain pipe 115 so that water does not flow to the bath-hot water supply apparatus 117.

When taking the acid bath, the three-way valves 111 and 118 are switched, and acid water obtained by the positive pole chamber 107 is supplied to the bathtub 121 through pipes 110 and 123. At that time, since the three-way valve 118 is switched, acid water does not flow to the bath-hot water supply apparatus 117. When drinking alkaline water in a bathroom, the three-way valve 119 is switched.

As described above, it is possible to eliminate hardness ingredient such as calcium and magnesium in water by the positive ion-exchange resin 112, and to prevent scale from adhering to the pipe of the bath-hot water supply apparatus 117 and to the bathtub 121. According to this, it is also possible to reduce the frequency of a cleaning operation of the bathtub.

Since the positive ion-exchange resin 112 is restored by acid water obtained by the electrolysis of water, it is unnecessary to supply salt or the like, and soft water can be supplied continuously. Since acid water flows to the bathtub, a user can enjoy acid bath, and the user can drink alkaline water in the bathroom.

As a technique for softening water, there is a technique using a water-splitting ion exchange membrane (see patent document 2).

According to this technique, a water-splitting ion exchange membrane including two layers, i.e., a positive ion exchange layer and a negative ion exchange layer is sandwiched between a pair of electrodes. If the electrodes are energized, hardness ingredient is absorbed on a surface of the water-splitting ion exchange membrane, ion exchange is carried out and water is softened. If polarity is reversed and voltage is applied, water is dissociated at an interface between the positive ion exchange layer and the negative ion exchange layer, and the water-splitting ion exchange membrane can be restored by hydrogen ion and hydroxide ion produced by the dissociation.
[Patent Document 1] Japanese Patent Application Laird-open No. H7-68256
[Patent Document 2] Japanese Patent No.4044148

### [Disclosure of the Invention]

### [Problem to be Solved by the Invention]

According to the configuration shown in the patent document 1, when the positive ion-exchange resin 112 is restored, water is dissociated by the electrolysis using the electrolysis apparatus 103, and acid water is produced. However, to carry out the electrolysis, a large amount of ion ingredient is usually required, and high voltage is required.

Further, since the electrolysis apparatus 103 and the water-softening apparatus 113 are independently provided, there are problems that the apparatus becomes complicated and a large installation space is required.

According to the method using the water-splitting ion exchange membrane shown in the patent document 2, hardness ingredient is absorbed to carry out the ion exchange on the surface of the water-splitting ion exchange membrane, thereby eliminating the hardness ingredient. At the time of restoration, water is dissociated at the interface of the water-splitting ion exchange membrane on which ion of hardness ingredient is ion-exchanged to produce the hydrogen ion and hydroxide ion, thereby restoring the water-splitting ion exchange membrane. Therefore, current efficiency at the time of restoration is high, and it is conceived that this technique is an effective water softening technique. However, when the water-splitting ion exchange membrane is applied to a hot water supply apparatus, this technique has the following problems.

As raw water supplied to the hot water supply apparatus, not only water supply but also ground water is used in some cases, and it is necessary to eliminate hardness ingredient of raw water having extremely high hardness - It is necessary to maintain power consumption of the hot water supply apparatus due to enhanced energy saving directivity of recent years, and it is also necessary to reduce the power consumption of water-softening operation. Especially since extra power is consumed when the water-splitting ion exchanger membrane is restored, it is necessary to reduce the power consumption at the time of restoration.

The present invention is for solving the conventional problems, and it is an object of the invention to provide a compact hot water supply apparatus having a simple configuration in which maintenance of the apparatus is unnecessary and raw water having high hardness can be softened and restored with low power consumption.

### [Means for Solving Problems]

The present invention provides a hot water supply apparatus having a hot water reservoir tank in which water is stored, a heat pump cycle having a compressor, a water heat exchanger, an air heat exchanger and refrigerant pipes which connect the compressor, the water heat exchanger and the air heat exchanger to each other, an outflow pipe which guides water in the lower portion of the hot water reservoir tank into the water heat exchanger, an inflow pipe which returns water heated by the water heat exchanger to the upper portion of the hot water reservoir tank, water-softening means having at least a pair of electrodes, a pair of water-splitting ion exchangers each having a positive ion exchanger and a negative ion exchanger, a flow path which is in contact with the water-splitting ion exchangers, and an inlet and an outlet which connect the flow path to the outflow pipe, wherein a drain pipe from which concentrated water produced when the water-splitting ion exchanger is restored is drained branches off at the outflow pipe of the outlet side of the water-softening means, and a switching valve which switches the flow path to the outflow pipe or the drain pipe is provided at a branched portion of the outflow pipe and the drain pipe.

According to a preferred embodiment of the invention in the hot water supply apparatus the positive ion exchanger and the negative ion exchanger are made as membranous ion exchangers the positive ion exchanger and the negative ion exchanger are pasted to each other, and the water-splitting ion exchangers are made as layered structure. The hot water supply apparatus comprises water heating means which heats water, and a hot water reservoir tank in which hot water heated by the water heating means is stored, the hot water in the hot water reservoir tank is guided into the water-softening means. The hot water reservoir tank can be of a laminated type tank including a water supply pipe through which raw water is supplied to a lower portion of the hot water reservoir tank, an outflow pipe through which low temperature water stored in the lower portion of the hot water reservoir tank is guided into the water heating means, and an inflow pipe through which high temperature water heated by the wafer heating means is returned to an upper portion of the hot water reservoir tank, and the water-softening means is provided at the outflow pipe. Moreover, the hot water in the hot water reservoir tank can be used when the waster-splitting ion exchanger is restored.

According to another aspect, the low temperature water stored in the lower portion of the hot water reservoir tank is guided into the water-softening means at the time of water-softening operation, and the high temperature water stored in an upper portion of the hot water reservoir tank is guided into the water-softening means at the time of restoration of the water-splitting ion exchanger. In the hot water supply apparatus of the invention , the hot water is guided from the outlet and the hot water is taken out from the inlet at the time of restoration.

According to a further preferred embodiment of the invention, a heat insulator is provided around the hot water reservoir tank.

According to another preferred embodiment of the invention, the water-softening means is disposed near the hot water reservoir tank.

Preferably, the water softening means is disposed near the heat exchanger.

### [Effect of the Invention]

According to the hot water supply apparatus, maintenance is unnecessary, the apparatus is small in size and configuration thereof is simple, raw water having high hardness can be softened with low power consumption and ion exchanger can be restored.

### [Brief Description of the Drawings]

Fig. 1 is a block diagram of a hot water supply apparatus according to the present invention;
Fig. 2 is a block diagram of water-softening means when water is softened in the embodiment;
Fig. 3 is a block diagram of the water-softening means at the time of restoration in the embodiment;
Tig. 4 is a block diagram of a hot water supply apparatus according to another embodiment of the invention;
Fig. 5 is a block diagram of a hot water supply apparatus according to another embodiment of the invention; and
Fig. 6 is a block diagram of a conventional hot water supply apparatus which prevents scale from being generated in a pipe.

### [Explanation of Symbols]

- 10: hot water reservoir unit
- 11: hot water reservoir tank
- 13: outflow pipe
- 14: inflow pipe
- 17: heat insulator
- 20: heat pump unit
- 22: water heat exchanger (water heating means)
- 30: water-softening means
- 32A, 32B: electrode
- 33: water-splitting ion exchanger
- 33A: positive ion exchanger
- 33B: negative ion exchanger
- 34: flow path
- 35: inlet
- 36: outlet

### [Best Mode for Carrying Out the Invention]

According to the hot water supply apparatus of the invention, heated hot water is guided into the water-softening means. According to this aspect, when water is softened, the water-splitting ion exchanger absorbs hardness ingredient and eliminates hardness ingredient included in hot water. At the time of restoration, water is dissociated at the interface of the water-splitting ion exchanger, and hydrogen ion and hydroxide ion are produced. The hardness ingredient is exchanged with hydrogen ion, thereby removing hardness ingredient from the water-spitting ion exchanger. Therefore, hardness ingredient can be removed from hot water and water is dissociated both by the water-splitting ion exchanger. Therefore, it is unnecessary to separately provide the water-softening means and the electrolysis apparatus, the configuration of the hot water supply apparatus is simple and the apparatus can be reduced in size. Water to be softened or water used for restoration is heated and guided into the water-softening means. Positive ion of calcium and magnesium which are hardness ingredients are ion-exchanged with the positive ion exchanger of the water-splitting ion exchanger. At that time, since the water to be softened or water used for restoration is heated, the ion exchanging speed becomes faster. Thus, the ion exchange on the surface of the positive ion exchanger is actively carried out, and water having high hardness is softened to water having lower hardness. In the water-splitting ion exchanger, if voltage is applied to the electrodes such that the positive ion exchanger becomes negative and the negative ion exchanger becomes positive, water is dissociated at the interface of the ion exchanger, and hydrogen ion and hydroxide ion are produced. These hydrogen ions are ion-exchanged with hardness ingredient, and restoration is carried out. Here, since water used for restoration is heated, the dissociation speed of water and the ion exchanging speed of the hydrogen ion become faster. According to this, restoration of the water-splitting ion exchanger is efficiently carried out, and power consumption at the time of restoration can be reduced.

According to a preferred embodiment of the invention, in the hot water supply apparatus, the positive ion exchanger and the negative ion exchanger are made as membranous ion exchangers, the positive ion exchanger and the negative ion exchanger are pasted to each other, and the water-splitting ion exchangers are made as layered structure. According to this aspect, the positive ion exchanger and the negative ion exchanger are disposed constantly in the polarity direction of the electrode, and it is possible to form an interface having a large area between the positive ion exchanger and the negative ion exchanger. According to this, ion is prone to move at the interface of the ion exchangers at the time of restoration, and resistance of the interface of the ion exchangers becomes high. Therefore, water is dissociated efficiently, and the water-splitting ion exchanger can be restored more efficiently. The hot water supply apparatus further comprises water heating means which heats water, and a hot water reservoir tank in which hot water heated by the water heating means is stored, the hot water in the hot water reservoir tank is guided into the water-softening means. According to this aspect, the ion exchanging speed becomes faster, and water can be softened to water having lower hardness. Further, the water-splitting ion exchanger is restored efficiently, and the power consumption at the time of restoration can be reduced.

The hot water reservoir tank can be a laminated type tank including a water supply pipe through which raw water is supplied to a lower portion of the hot water reservoir tank, an outflow pipe through which low temperature water stored in the lower portion of the hot water reservoir tank is guided into the water heating means, and an inflow pipe through which high temperature water heated by the water heating means is returned to an upper portion of the hot water reservoir tank, and the water-softening means is provided at the outflow pipe. According to this aspect, if the boiling operation of the water heating means progresses, water having high hardness stored in the lower portion of the hot water reservoir tank is heated by the high temperature water stored in the upper portion of the hot water reservoir tank. This heated water having high hardness is sent to the water-softening means and softened. Therefore, the speed of the ion exchanging of the hardness ingredient of raw water carried out by the water-splitting ion exchanger becomes faster, and water can be softened with lower hardness. Since the soft water is heated by the water heating means, it is possible to prevent scale ingredient such as calcium and carbonate from being produced by the water heating means. Since water heated by the hot water reservoir tank can be used also at the time of restoration of the water-splitting ion exchanger, the restoration is efficiently carried out, and the power consumption at the time of the restoration can be reduced. The hot water in the hot water reservoir tank can be used when the water-splitting ion exchanger is restored. According to this aspect, since the water-splitting ion exchanger is restored using hot water, energy required for dissociation of water can be reduced, and the ion exchanging speed when a membrane is restored by dissociated hydrogen ion can be enhanced. Further, since the water-splitting ion exchanger is restored by soft water treated by the water-softening means, dissociation of water by low current is prone to occur and thus, power consumption at the time of restoration can further be reduced. The low temperature water stored in the lower portion of the hot water reservoir tank is guided into the water-softening means at the time of water-softening operation, and the high temperature water stored in an upper portion of the hot water reservoir tank is guided into the water-softening means at the time of restoration of the water-splitting ion exchanger. According to this aspect, high temperature water can be restored even during the boiling operation, the water-splitting ion exchanger is efficiently carried out, and the boiling operation-stopping time caused by restoration can be shortened. As a result, since the water-softening operation and the restoring operation can be repeated during the boiling operation, a large amount of raw water as large as a few hundred of liters can be softened to a given hardness without increasing the area of the water-splitting ion exchanger or increasing the treatment capacity. The hot water is guided from the outlet and the hot water is taken out from the inlet at the time of restoration. According to this aspect, concentrated water of hardness ingredient which is produced at the time of restoration is discharged outside without spreading over the entire surface of the water-splitting ion exchanger, it is possible to prevent concentrated water from again adhering to the water-splitting ion exchanger, and durability of membrane can be secured.

According to a preferred embodiment of the invention, a heat insulator is provided around the hot water reservoir tank. According to this aspect, a temperature of heated water in the hot water reservoir tank or a temperature of hot water boiled by the water heating means can be maintained. Thus, it is possible to prevent the temperature of water guided into the water-softening means from being reduced, and to maintain the ion exchanging speed. According to this, raw water having high hardness can be softened to water having lower hardness. Further, reduction in energy required for dissociating water can be maintained, and ion exchanging speed when a membrane is restored by hydrogen ion produced by the dissociation can be maintained. According to this, the water-splitting ion exchanger is restored more efficiency, and power consumption at the time of the restoration can further be reduced.

According to a further preferred embodiment of the invention , the water-softening means is disposed near the hot water reservoir tank. According to this aspect, since the water-softening means is heated by heat of boiled hot water in the hot water reservoir tank, water flowing through the waster-softening means is heated. According to this, the ion exchanging speed can be enhanced and thus, raw water having high hardness can be softened to water having lower hardness. Further, energy required for dissociating water can be reduced, and ion exchanging speed when a membrane is restored by hydrogen ion produced by the dissociation can be enhanced. According to this, the water-splitting ion exchanger is restored more efficiency, and power consumption at the time of the restoration can further be reduced.

Preferably, the water softening means is also disposed near the water heating means. According to this aspect, the water-softening means is heated by heat radiated from the water heating means, water flowing through the water-softening means is heated. According to this, the ion exchanging speed can be enhanced and raw water having high hardness can be softened to water having lower hardness. Further, energy required for dissociating water at the time of restoration can be reduced, and ion exchanging speed when a membrane is restored by hydrogen ion produced by the dissociation can be enhanced. According to this, the water-splitting ion exchanger is restored more efficiency, and power consumption at the time of the restoration can further be reduced.

Embodiments of the present invention will be described with reference to the drawings. The invention is not limited to the embodiments.

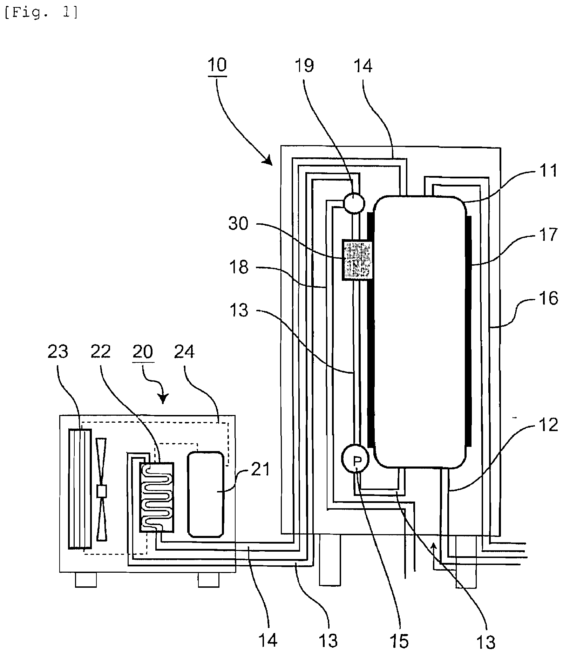

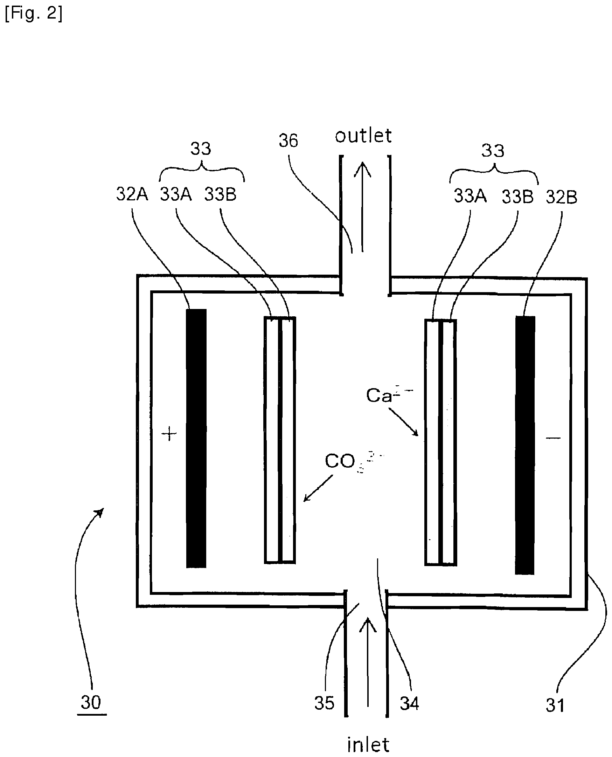

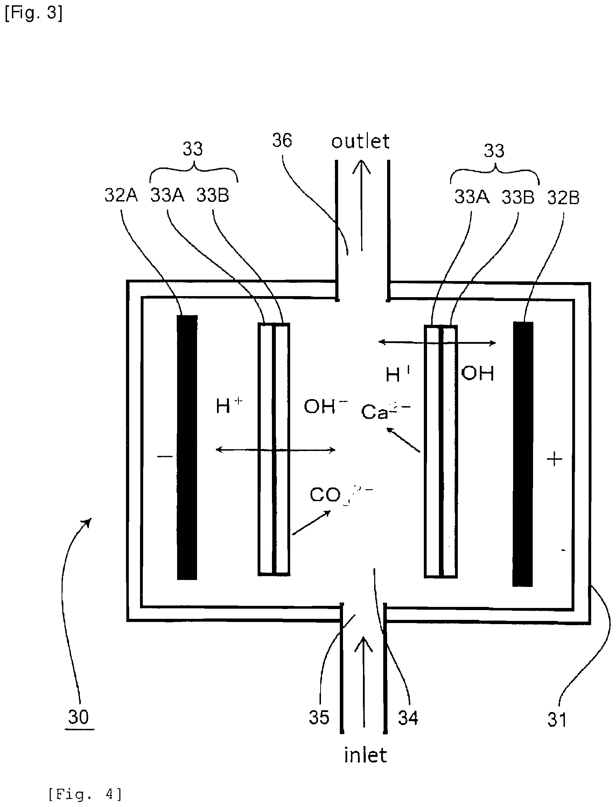

Fig. 1 is a block diagram of a hot water supply apparatus according to the invention. Fig. 2 is a block diagram of water-softening means when water is softened in the embodiment. Fig. 3 is a block diagram of the water-softening means at the time of restoration in the embodiment.

As shown in Fig. 1, the hot water supply apparatus of the embodiment includes a hot water reservoir unit 10, a heat pump unit 20 and water-softening means 30.

A laminated type hot water reservoir tank 11 is disposed in the hot water reservoir unit 10. Boiled high temperature water is stored in the hot water reservoir tank 11 from its upper portion in sequence. A water supply pipe 12 is connected to a lower portion of the hot water reservoir tank 11. Raw water is supplied from tap water to the hot water reservoir tank 11 through the water supply pipe 12.

An outflow pipe 13 is connected to a lower portion of the hot water reservoir tank 11, and an inflow pipe 14 is connected to an upper portion of the hot water reservoir tank 11. Water in the reservoir tank 11 is sent to the heat pump unit 20 through the outflow pipe 13 of the lower portion by a boiling pump 15. Boiled high temperature water is supplied to an upper portion of the hot water reservoir tank 11 through the inflow pipe 14 by the heat pump unit 20.

A hot water supply pipe 16 is connected to the upper portion of the hot water reservoir tank 11. High temperature water stored in the upper portion of the hot water reservoir tank 11 is supplied to the bath or the like through the hot water supply pipe 16.

In the heat pump unit 20, a compressor 21, a water heat exchanger (water heating means) 22, and an air heat exchanger 23 which absorbs heat from outside air are connected to each other through a refrigerant pipe 24, and a heat pump cycle is constituted using a refrigerant such as CO₂.

Low temperature water stored in the lower portion of the hot water reservoir tank 11 of the hot water reservoir unit 10 is guided into a water heat exchanger 22 of the heat pump unit 20 through the outflow pipe 13. High temperature water heated by the water heat exchanger 22 is returned to the upper portion of the hot water reservoir tank 11 through the inflow pipe 14.

The water-softening means 30 is connected to the outflow pipe 13 downstream of the hot water reservoir tank 11 in the hot water reservoir unit 10 upstream from the water heat exchanger 22. The water-softening means 30 is connected to the outflow pipe 13 at a location near a side surface of the upper portion of the hot water reservoir tank 11. It is preferable that the water-softening means 30 is connected to the outflow pipe 13 at a location where heat radiation from the hot water reservoir tank 11 can be utilized, the water-softening means 30 is disposed in contact with the hot water reservoir tank 11 and more preferably, the water-softening means 30 is disposed on the side surface or an upper surface of the upper portion of the hot water reservoir tank 11.

A heat insulator 17 is provided around the side surface of the hot water reservoir tank 11 to prevent the temperature of water in the tank from being reduced. It is preferable that the water-softening means 30 is covered with the heat insulator 17 together with the hot water reservoir tank 11.

In Fig. 2, in the water-softening means 30 of the embodiment, a pair of electrodes 32A and 32B are provided on both side ends in a casing 31. The electrodes 32A and 32B are formed from titanium plated with platinum, thereby securing wear resistance of the electrodes 32A and 32B. A pair of water-splitting ion exchangers 33 are provided between the pair of electrodes 32A and 32B with a flow path 34 interposed therebetween.

Each of the water-splitting ion exchanger 33 includes a membranous positive ion exchanger 33A having overacidity ion exchange group and a membranous negative ion exchanger 33B having strong base ion exchange group, and the positive ion exchanger 33A and the negative ion exchanger 33B are pasted on each other so that the water-splitting ion exchanger 33 is of a double-layer structure. The positive ion exchanger 33A is disposed on the side of the electrode 32A which becomes positive when water is softened, and the negative ion exchanger 33B is disposed on the side of the electrode 32B which becomes negative when water is softened. Therefore, the negative ion exchanger 33B of the water-splitting ion exchanger 33 disposed on the side of the electrode 32A which becomes positive and the positive ion exchanger 33A of the water-splitting ion exchanger 33 disposed on the side of the electrode 32B which becomes negative are opposed to each other with the flow path 34 interposed therebetween. The positive ion exchanger 33A includes overacidity ion exchange group having -SO₃H as functional group, and strong base ion exchange group having -NR₂OH as functional group.

An inlet 35 and an outlet 36 which are in communication with the flow path 34 are formed in the casing 31, and the inlet 35 and the outlet 36 are connected to the outflow pipe 13 shown in Fig. 1.

The outlet 36 of the water-softening means 30 is provided with a drain pipe 18 which branches from the outflow pipe 13 as shown in Fig. 1. Concentrated water produced when the water-splitting ion exchanger 33 is restored is drained from the drain pipe 18. A switching valve 19 is provided at the branched portion so that the flow paths can be switched.

Operation of the hot water supply apparatus having the above-described configuration will be described below.

First, raw water is supplied to the hot water reservoir tank 11 of the hot water reservoir unit 10 through the water supply pipe 12. Calcium and magnesium of hardness ingredient are included in the raw water. When a region or a hot spring region utilizes ground water as a water source, its raw water is hard water having hardness of 100 ppm or higher, and this may form scale in the pipe of the heating means of the hot water supply apparatus.

Usually, the boiling operation of the heat pump hot water supply apparatus is carried out during off-peak energy late-night hours. At the off-peak energy time, low temperature water having high hardness in the hot water reservoir tank 11 is sent to the boiling pump 15, and the low temperature water is guided into the water-softening means 30 through the outflow pipe 13.

Calcium carbonate in the hardness ingredient in the raw water flows in from the inlet 35 of the casing 31 in its ionized state, and flows through the flow path 34. At that time, direct voltage is applied to the electrodes 32A and 32B disposed in the casing 31. At that time, when water is softened, positive voltage is applied to the electrode 32A on the side of the positive ion exchanger 33A, the electrode 32A becomes positive, and the electrode 32B on the side of the negative ion exchanger 33B becomes negative.

As a result, calcium ion in the low temperature water is electrophoresed and enters into the positive ion exchanger 33A, and carbonate ion is electrophoresed and enters into the negative ion exchanger 33B. Calcium ion is ion-exchanged with -SO₃H hydrogen ion which is overacidity ion exchange group of the positive ion exchanger 33A. Carbonate ion is ion-exchanged with -NR₃OH hydroxide ion which is strong base ion exchange group of the negative ion exchanger 33B. In this way, the hardness ingredient in the low temperature water flowing through the flow path 34 is removed, and the low temperature water is softened. The softened low temperature water flows out from the outlet 36 of the casing 31 as treated water.

This treated water flows into the water heat exchanger 22 of the heat pump unit 20 through the outflow pipe 13.

In the heat pump cycle, by operating the compressor 21, a refrigerant in the air heat exchanger 23 is evaporated and heat is absorbed from the outside air. A refrigerant which absorbs heat from the outside air is compressed to high temperature and high pressure by the compressor 21, and radiate heat in the water heat exchanger 22. By this radiation of heat, the treated water in the water heat exchanger 22 is heated. The softened low temperature water is boiled.

Since hardness ingredient is removed from the heated high temperature water, it is possible to prevent scale such as calcium carbonate and magnesium sulfate from adhering to an inner surface of the water heat exchanger 22. The high temperature water boiled by the water heat exchanger 22 is guided into the hot water reservoir tank 11 from the upper portion of the hot water reservoir tank 11 through the inflow pipe 14.

During the boiling operation of the hot water supply apparatus, low temperature water is softened by the water-softening means 30. The low temperature water passes through the outflow pipe 13 through the switching valve 19, and the low temperature water is heated by the water heat exchanger 22 and becomes high temperature water. The high temperature water is stored in the hot water reservoir tank 11. When a user uses hot water in the bath (not shown), high temperature water stored in the upper layer of the hot water reservoir tank 11 is supplied to the bathtub of the bath.

Before raw water which exists in the lower layer of the hot water reservoir tank 11 and which is softened is boiled, a temperature of the raw water is the same as a temperature of tap water. However, if boiling operation of the raw water by the water heat exchanger 22 advances, and boiled high temperature water of 60°C exists in the upper layer of the hot water reservoir tank 11. Therefore, raw water in the lower layer is heated by the high temperature water. Therefore, as boiling time advances, the temperature of the raw water having high hardness which exists in the lower layer in the hot water reservoir tank 11 becomes higher.

The low temperature water having high hardness is sent to the water-softening means 30 and is softened. According to this, positive ion of calcium or magnesium which is hardness ingredient is ion-exchanged by the positive ion exchanger 33A of the water-splitting ion exchanger 33 of the water-softening means 30. At that time, since the raw water is heated, the ion exchanging speed becomes high. Therefore, ion-exchange on the surface of the positive ion exchanger 33A is carried out actively. Thus, raw water having high hardness can be treated into soft water having lower hardness.

Next, during boiling operation or after the boiling operation is completed, the restoring operation of the water-softening means 30 is carried out.

At the time of the restoring operation of the water-softening means 30, a given amount of low temperature water is sent from the lower portion of the reservoir tank 11 by the boiling pump 15, and the low temperature water is guided into the water-softening means 30 through the outflow pipe 13, and the switching valve 19 is closed.

As shown in Fig. 3, at the time of the restoring operation, voltage in a direction opposite from that at the time of the water-softening operation is applied to the electrodes 32A and 32B of the water-softening means 30. The electrode 32B on the side of the negative ion exchanger 33B becomes positive, and the electrode 32A on the side of the positive ion exchanger 33A becomes negative. If voltage is applied to both sides of the water-splitting ion exchanger 33, ion ingredient in the interface between the positive ion exchanger 33A and the negative ion exchanger 33B is reduced, and resistance in the interface is increased. Water is dissociated at some point in time, and hydrogen ion and hydroxide ion are produced.

In the positive ion exchanger 33A, calcium ion which was ion-exchanged at the time of the water-softening operation is ion-exchanged with the hydrogen ion, and the positive ion exchanger 33A is restored. Calcium ion is discharged into the flow path 34. In the negative ion exchanger 33B, carbonate ion which was ion-exchanged at the time of the water-softening operation is ion-exchanged with produced hydroxide ion, and the negative ion exchanger 33B is restored. Carbonate ion is discharged into the flow path 34.

Here, although a case where the hardness ingredient is the calcium carbonate was described with reference to Figs 2 and 3, even if the hardness ingredient is magnesium sulfate, it can be eliminated by the same operation.

Sodium chloride included in seawater, and heavy metal such as lead, zinc and arsenic highly included in ground water can be eliminated by positive ion exchanger. Further, nitric acid ion, chlorine ion, phosphoric acid ion and chromic acid ion which cause corrosion can be eliminated by negative ion exchanger.

Further, although -SO₃H overacidity ion exchange group was used as the positive ion exchanger 33A and -NR₃OH strong base ion exchange group was used as the negative ion exchanger 33B in this embodiment, the positive ion exchanger 33A and the negative ion exchanger 33B may be formed using weak acid ion exchange group and weekly basic ion exchange group. If the weak acid ion exchange group and the weekly basic ion exchange group are used, ingredient which can be ion-exchanged is limited, but the restoration ratio of the ion exchanger becomes high.

Water is dissociated and a membrane is restored by applying voltage having polarity opposite from that at the time of the water-softening operation to the both sides of the water-splitting ion exchanger 33. According to the membranous water-splitting ion exchanger 33 of this embodiment, since the interface between the positive ion exchanger 33A and the negative ion exchanger 33B has a large area, water is dissociated with low voltage efficiently, and the membrane can be restored with low power consumption.

After voltage is applied to the water-splitting ion exchanger 33 for given time and the restoring operation is carried out, the flow path is switched to the drain pipe 18 by the switching valve 19. Concentrated water of hardness ingredient in the flow path 34 of the water-softening means 30 is discharged outside through the drain pipe 18. The discharged concentrated water is drained into a drain groove (not shown) in the lower portion of the hot water reservoir unit 10.

After the concentrated water is discharged, the switching valve 19 is closed. A given amount of water is guided from the reservoir tank 11 into the water-softening means 30, and the water-splitting ion exchanger 33 is restored. Thereafter, the flow path is switched by the switching valve 19, and concentrated water after restoration is discharged through the drain pipe 18. By repeating such operations several times, the water-softening means 30 is restored.

Since the water-softening operation and restoring operation are carried out by the water-softening means 30, it is unnecessary to separately dispose the electrolysis apparatus for the restoration, and the configuration of the apparatus is simple and the apparatus can be reduced in size.

Water used at the time of the restoring operation of the water-softening means 30 is low temperature water in the lower layer of the hot water reservoir tank 11 like the water at the time of the water-softening operation. Therefore, as the boiling time advances, a temperature of the low temperature water existing in the lower layer in the hot water reservoir tank 11 increases, and the low temperature water is supplied to the water-softening means 30 in a state where the low temperature water is heated.

Since the water used at the time of the restoring operation is heated, energy required for dissociating water is reduced, and ion exchanging speed when a membrane is restored by hydrogen ion produced by the dissociation is increased. According to this, the water-splitting ion exchanger 33 is restored efficiency, and power consumption at the time of the restoration can be reduced.

Further, after the boiling operation by the water heat exchanger 22 is completed, high temperature water in the hot water reservoir tank 11 is guided into the water-softening means 30, restoration of the water-splitting ion exchanger 33 is carried out, thereby guiding high temperature water of 60°C or higher into the water-softening means 30, and the water-splitting ion exchanger 33 can be restored. Therefore, energy required for dissociating water can be further reduced, and ion exchanging speed when membrane is restored by the dissociated hydrogen ion can be increased.

Since the water-splitting ion exchanger 33 is restored by soft water treated by the water-softening means 30, water is prone to be dissociated by low current. Therefore, power consumption at the time of the restoring operation can further be reduced.

The water-softening means 30 is provided near the side surface of the upper portion of the hot water reservoir tank 11. Therefore, since the water-softening means 30 is heated by heat of the hot water reservoir tank 11, hot water passing through the water-softening means 30 can further be heated.

Since the heat insulator 17 for preventing the water temperature in the tank from reducing is provided around the side surface of the hot water reservoir tank 11, the temperature in the hot water reservoir tank 11 can be maintained. Thus, temperature reduction of water guided into the water-softening means 30 can be prevented.

In the hot water supply apparatus of the embodiment, the hot water reservoir tank 11, the water heat exchanger 22 and the water-softening means 30 are provided. The water-softening means 30 includes at least the pair of electrodes 32A and 32B, the pair of water-splitting ion exchangers 33 each having two layers, i.e., the positive ion exchanger 33A and the negative ion exchanger 33B sandwiched between the electrodes 32A and 32B, and the flow path 34 which is in contact with the water-splitting ion exchangers 33. Hot water in the hot water reservoir tank 11 boiled by the water heat exchanger 22 is guided into the water-softening means 30. According to this configuration, both the elimination of the hardness ingredient and dissociation of water required for the restoration are carried out in the water-splitting ion exchanger 33. Therefore, it is unnecessary to separately dispose the water-softening means 30 and the electrolysis apparatus, the configuration of the apparatus is simple and the apparatus can be reduced in size.

Since the heated hot water is guided into the water-softening means 30, the ion exchanging speed is increased, and raw water having high hardness can be treated to soft water having low hardness.

Since water used for restoration of the water-splitting ion exchanger 33 is heated, energy required for dissociation of water is reduced, and the ion exchanging speed when a membrane is restored by hydrogen ion produced by the dissociation is increased. According to this, since the restoration of the water-splitting ion exchanger 33 is efficiently carried out, the power consumption at the time of the restoration can be reduced.

Although a case where the water-splitting ion exchanger 33 is of membranous is described in this embodiment, granular ion-exchange resin may be used as the positive ion exchanger 33A and the negative ion exchanger 33B. According to this configuration, since the ion-exchange resin is used as it is, there is a merit that the ion exchanging capacity is increased.

However, in this configuration, pressure loss is increased as compared with a configuration using a membranous ion exchanger. Therefore, a flow rate of water flowing through the water-softening means is reduced and time required for water to pass through the water-softening means is increased. Thus, when granular ion-exchange resin is applied, a temperature of heated raw water or water used for restoration is reduced, and the ion exchanging speed at the time of the water-softening operation or dissociation speed of water at the time of the restoring operation is reduced. Further, it is difficult to constantly dispose the positive ion exchanger and the negative ion exchanger with respect to the polarity direction of the electrode. Therefore, there are drawbacks that ion is less prone to move at the interface of the ion exchanger at the time of restoration, water is dissociated inefficiently, and restoration efficiency of the water-splitting ion exchanger is low.

Further, fibrous ion exchangers may be used as the positive ion exchanger 33A and the negative ion exchanger 33B. According to this configuration, pressure loss is small as compared with the granular ion-exchange resin, and necessary treatment flow rate can be maintained. However, since fibrous ion exchanger has a small area of the interface between the positive ion exchanger and the negative ion exchanger as compared with the granular ion exchanger, there is a drawback that the restoration efficiency of the water-splitting ion exchanger 33 is deteriorated.

In this embodiment, low temperature water is taken out from the lower portion of the hot water reservoir tank 11, and boiled high temperature water is returned to the upper portion of the hot water reservoir tank 11. However, the same effect can also be obtained in a configuration that low temperature water is taken out from a lower portion of a side surface of the hot water reservoir tank 11, and boiled high temperature water is returned to the upper portion of the side surface of the hot water reservoir tank 11.

Although water is heated by the water heat exchanger 22 of the heat pump cycle in the embodiment, the same effect can also be obtained even if water is heated by a heater or gas.

### [Second Embodiment]

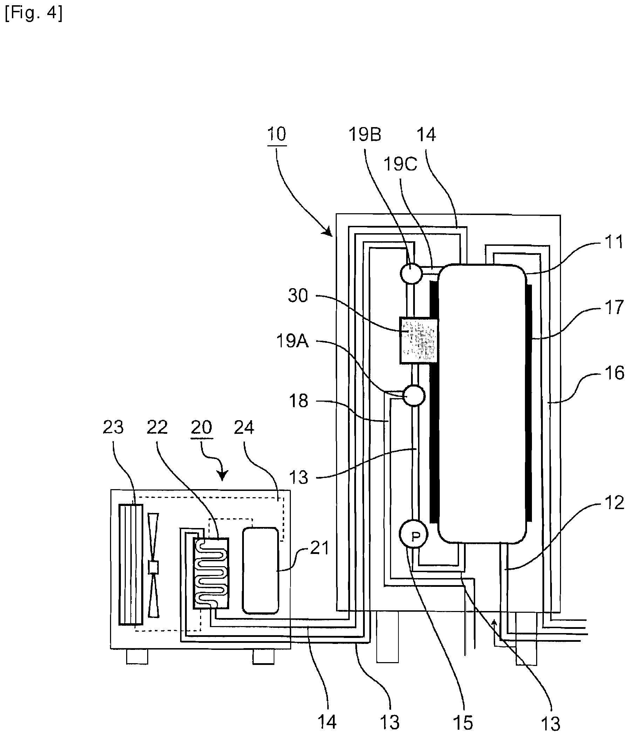

Fig. 4 is a block diagram of a hot water supply apparatus according to a further embodiment of the invention.

The hot water supply apparatus shown in in Fig. 4 comprises a configuration for guiding water into the water-softening means at the time of the restoration, and a configuration for discharging concentrated water from the water-softening means at the time of the restoration. The different configurations will be described and description of other configuration will be omitted.

In Fig. 4, a restoration running water pipe 19C is opened and connected to the upper portion of the hot water reservoir tank 11. The outlet 36 of the water-softening means 30 is disposed at the outflow pipe 13, and a second switching valve 19B is provided at the outlet 36 of the water-softening means 30. The second switching valve 19B is connected to a restoration running water pipe 19C. The switching valve 19A and the drain pipe 18 are provided at the inlet 35 of the water-softening means 30. Condensed water is discharged through the drain pipe 18 at the time of the restoration. A flow path can be switched between the outflow pipe 13 and the restoration running water pipe 19C by the second switching valve 19B.

Operation of the hot water supply apparatus constituted as described above will be described below.

At the time of the water-softening operation of the water-softening means 30, like the first embodiment, low temperature water having high hardness is sent from the lower portion of the hot water reservoir tank 11 by the boiling pump 15. The low temperature water is guided into the water-softening means 30 through the switching valve 19A and the outflow pipe 13, and the water is softened. At that time, the second switching valve 19B sets the flow path on the side of the outflow pipe 13. Therefore, softened water is guided into the heat pump unit 20 and boiled by the water heat exchanger 22. The boiled high temperature water is guided into the upper portion of the hot water reservoir tank 11 through the inflow pipe 14, and is stored in the hot water reservoir tank 11.

At the time of the restoration of the water-softening means 30, the second switching valve 19B sets the flow path such that water flows from the restoration running water pipe 19C to the outlet 36 of the water-softening means 30. The flow path of the switching valve 19A is switched such that water flows toward the drain pipe 18 from the inlet 35 of the water-softening means 30. According to this configuration, softened high temperature water of 60°C or higher existing in the upper layer of the hot water reservoir tank 11 is guided into the water-softening means 30. By closing the switching valve 19A, a given amount of softened high temperature water is stored in the water-softening means 30.

If the given amount of softened high temperature water is stored in the water-softening means 30, voltage in a direction opposite from that at the time of the water-softening operation is applied to the electrodes 32A, 32B as in the first embodiment. Then, dissociation of water is carried out, and hydrogen ion and hydroxide ion are produced.

In the positive ion exchanger 33A, calcium ion which was ion-exchanged at the time of the water-softening operation is ion-exchanged with the produced hydrogen ion, and the positive ion exchanger 33A is restored. The calcium ion is discharged into the flow path 34. In the negative ion exchanger 33B, carbonate ion which was ion-exchanged at the time of the water-softening operation is ion-exchanged with the produced hydroxide ion, and the negative ion exchanger 33B is restored. The carbonate ion is discharged into the flow path 34.

After voltage is applied to the water-splitting ion exchanger 33 for given time and the water-splitting ion exchanger 33 is restored, the flow path of the switching valve 19A is switched such that water flows from the water-softening means 30 toward the drain pipe 18. According to this configuration, concentrated water of hardness ingredient in the flow path 34 is discharged outside through the drain pipe 18. This discharged concentrated water flows into the drain groove (not shown) formed in the lower portion of the hot water reservoir unit 10.

High temperature water in the hot water reservoir tank 11 is newly guided into the water-softening means 30. Similarly, voltage is applied to the electrodes 32A and 32B, and the restoration of the water-splitting ion exchanger 33 is carried out. Thereafter, the flow path is switched by the switching valve 19A, and concentrated water after the restoration is discharged outside through the drain pipe 18. By repeating these operations several times, the restoration of the water-softening means 30 is carried out.

Since the softened high temperature water of 60°C or higher can be guided into the water-softening means 30 even during the boiling operation, the water-splitting ion exchanger 33 is restored efficiently, and the boiling operation-stopping time caused by the restoration can be shortened. Since the boiling operation-stopping time can be shortened, a deleterious effect on the boiling treatment time can be reduced. As a result, since the water-softening operation and the restoring operation can be repeated during the boiling operation, a large amount of hot water as large as a few hundred of liters in the hot water reservoir tank 11 can be softened to a given hardness without increasing the area of the water-splitting ion exchanger 33 or increasing the treatment capacity.

A direction of water flow at the time of the restoration in the water-splitting ion exchanger 33 is opposite from a direction of water flow at the time of the water-softening operation. At the time of the water-softening operation, in the water-splitting ion exchanger 33, a large amount of hardness ingredients are ion-exchanged and gathered at the inlet 35 of the water-softening means 30. In other words, concentration of concentrated water is increased at the inlet 35 of the water-softening means 30.

Therefore, at the restoring operation, high temperature water is guided into the water-softening means 30 from a direction opposite from the water-softening operation. That is, water flows from the outlet 36 of the water-softening means 30. By this reverse flowing, the concentrated water is discharged from the drain pipe 18 without spreading to the entire surface of the water-splitting ion exchanger 33. As a result, it is possible to prevent the concentrated water from again adhering to the water-splitting ion exchanger 33.

As described above, according to the hot water supply apparatus, at the time of the water-softening operation, low temperature water is supplied from the lower portion of the hot water reservoir tank 11 to the water-softening means 30 and softened, and at the time of the restoring operation of the water-splitting ion exchanger 33 of the water-softening means 30, high temperature water is supplied from the upper portion of the hot water reservoir tank 11 to the water-softening means 30 and restored.

According to this configuration, the water-splitting ion exchanger 33 is restored efficiently, and the boiling operation-stopping time caused by the restoration can be shortened. Since the water-softening operation and the restoring operation can be repeated during the boiling operation, it is possible to soften a large mount of hot water as large as a few hundred of liters in the hot water reservoir tank 11 to a given hardness without increasing the area of the water-splitting ion exchanger 33 (e.g., a bipolar charged file) or increasing the treatment capacity.

Further, at the time of the restoring operation, water flows from a direction opposite that at the time of the water-softening operation. According to this configuration, since the concentrated water is discharged form the drain pipe 18 without spreading to the entire surface of the water-splitting ion exchanger 33, it is possible to prevent the concentrated water from again adhering to the water-splitting ion exchanger 33.

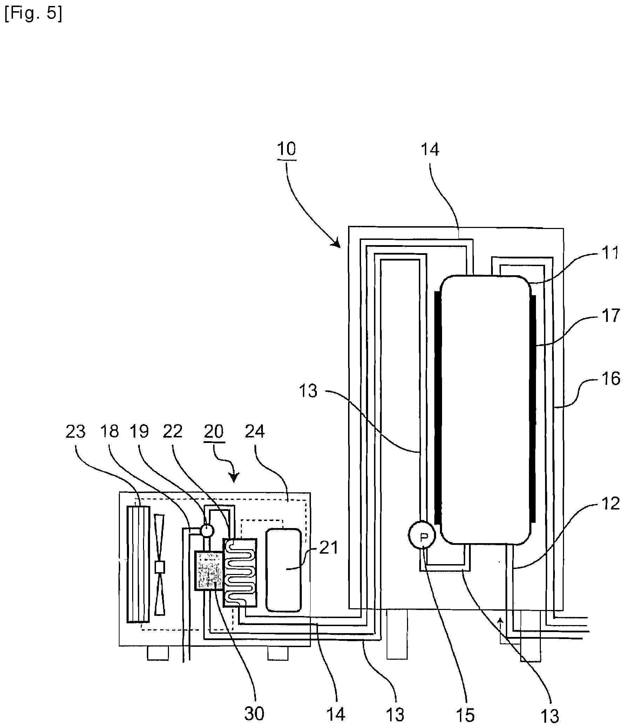

Fig. 5 is a block diagram of a hot water supply apparatus according to another embodiment of the invention.

In Fig. 5, the water-softening means 30 is disposed at a running water pipe 4 outside from the lower portion of the hot water reservoir tank 11 and near the water heat exchanger 22 in the heat pump unit 20. Like the first embodiment, the drain pipe 18 from which concentrated water produced when the water-splitting ion exchanger 33 is restored branches off from the outflow pipe 13 at the outlet 36 of the water-softening means 30. The switching valve 19 is provided at the branched portion and the switching valve 19 switches the flow path. Condensed water is discharged outside of the unit through a drain port (not shown) of the heat pump unit 20.

Operation of the hot water supply apparatus constituted as described above will be described below.

If the heat pump cycle is operated at the time of the boiling operation of the hot water supply apparatus, water flowing through the outflow pipe 13 is boiled by heat radiated from the water heat exchanger 22. At the same time, since the water-softening means 30 is disposed near the water heat exchanger 22, the water is heated by heat radiated from the water heat exchanger 22. According to this, the low temperature water flowing through the water-softening means 30 is further heated, and the ion exchanging speed can be enhanced. Thus, the low temperature water having high hardness can be softened to water having lower hardness.

Since low temperature water used for restoration is also heated by heat radiated from the water heat exchanger 22, energy required for dissociation of water at the time of the restoration can be reduced, and the ion exchanging speed at the time of the restoring operation of film by the hydrogen ion produced by the dissociation can be enhanced. According to this, the water-splitting ion exchanger 33 is further efficiently restored, and the power consumption at the time of the restoration can further be reduced.

The drain pipe 18 is provided in the heat pump unit 20 which is disposed out of doors. Concentrated water produced at the time of the restoration is discharged outside of the unit from the drain port of the heat pump unit 20. According to this configuration, since gas generated at the time of the restoration and included in concentrated water can easily be dispersed into atmosphere, safety can further be enhanced.

According to the hot water supply apparatus of this embodiment, since the water-softening means 30 is disposed near the water heat exchanger 22, the water-softening means 30 is heated by heat radiated from the water heat exchanger 22. Therefore, low temperature water flowing through the water-softening means 30 is heated and the ion exchanging speed can be enhanced. Thus, raw water having high hardness can be softened to water having lower hardness.

Further, energy required for dissociation of water at the time of the restoration can be reduced, and the ion exchanging speed at the time of the restoring operation of film by the hydrogen ion produced by the dissociation can be enhanced. According to this, the water-splitting ion exchanger is further efficiently restored, and the power consumption at the time of the restoration can further be reduced.

Further, since concentrated water at the time of restoration is discharged out of doors, gas included in the concentrated water can easily be dispersed into atmosphere, and safety can further be enhanced.

### [Industrial Applicability]

As described above, according to the hot water supply apparatus of the invention, maintenance is unnecessary, the configuration of the apparatus is simple and the apparatus can be reduced in size. Power consumption is low, hardness ingredient of raw water having high hardness can be eliminated and restored, and the apparatus can be used in a washing machine and a dishwasher.

## Claims

1. A hot water supply apparatus having
a hot water reservoir tank (11) in which water is stored,
a heat pump cycle having a compressor (21), a water heat exchanger (22), an air heat exchanger (23) and refrigerant pipes which connect the compressor, the water heat exchanger and the air heat exchanger to each other,
an outflow pipe (13) which guides water in the lower portion of the hot water reservoir tank (11) into the water heat exchanger (22),
an inflow pipe (14) which returns water heated by the water heat exchanger (22) to the upper portion of the hot water reservoir tank (11),
water-softening (30) means having at least a pair of electrodes, a pair of water-splitting ion exchangers (33) each having a positive ion exchanger and a negative ion exchanger, a flow path which is in contact with the water-splitting ion exchangers (33), and an inlet and an outlet which connect the flow path to the outflow pipe (13),
wherein
a drain pipe (18) from which concentrated water produced when the water-splitting ion exchanger (33) is restored is drained branches off at the outflow pipe (13) of the outlet side of the water-softening means (13), and
a switching valve (19) which switches the flow path to the outflow pipe (13) or the drain pipe (18) is provided at a branched portion of the outflow pipe (13) and the drain pipe (18).

2. The hot water supply apparatus according to claim 1, wherein the positive ion exchanger and the negative ion exchanger are made as membranous ion exchangers (33), the positive ion exchanger and the negative ion exchanger are pasted to each other, and the water-splitting ion exchangers are made as layered structure.

3. The hot water supply apparatus according to claim 1, wherein a heat insulator (17) is provided around the hot water reservoir tank.

4. The hot water supply apparatus according to claim 1, wherein the water-softening means (30) is disposed near the hot water reservoir tank (11).

5. The hot water supply apparatus according to claim 1, wherein the water-softening means (30) is disposed near the water heat exchanger (20).

## Patentansprüche

1. Warmwasserversorgungsvorrichtung mit
einem Warmwasserspeicherbehälter (11), in dem Wasser gespeichert wird,
einem Wärmepumpenkreis mit einem Kompressor (21), einem Wasser-Wärmetauscher (22), einem Luft-Wärmetauscher (23) und Kältemittelrohren, die den Kompressor, den Wasser-Wärmetauscher und den Luft-Wärmetauscher miteinander verbinden,
einem Ausströmrohr (13), das Wasser im unteren Teil des Warmwasserspeicherbehälters (11) in den Wasser-Wärmetauscher (22) leitet,
einem Einströmrohr (14), das durch den Wasser-Wärmetauscher (22) erwärmtes Wasser zum oberen Teil des Warmwasserspeicherbehälters (11) zurückführt,
einer Wasserenthärtungseinrichtung (30) mit mindestens einem Paar Elektroden, einem Paar wasserspaltender Ionenaustauscher (33), jeweils mit einem positiven Ionenaustauscher und einem negativen Ionenaustauscher, einem Strömungspfad, der in Kontakt mit den wasserspaltenden Ionenaustauschern (33) steht, und einem Einlass und einem Auslass, die den Strömungspfad mit dem Ausströmrohr (13) verbinden,
wobei
ein Ablassrohr (18), aus dem konzentriertes Wasser abgelassen wird, das erzeugt wird, wenn der wasserspaltende Ionenaustauscher (33) regeneriert wird, am Ausströmrohr (13) der Auslassseite der Wasserenthärtungseinrichtung abzweigt, und
ein Schaltventil (19), das den Strömungspfad zum Ausströmrohr (13) oder zum Ablassrohr (18) schaltet, an einem verzweigten Teil des Ausströmrohr (13) und des Ablassrohrs (18) vorgesehen ist.

2. Warmwasserversorgungsvorrichtung nach Anspruch 1, wobei der positive Ionenaustauscher und der negative Ionenaustauscher als Membranen-Ionenaustauscher (33) hergestellt sind, der positive Ionenaustauscher und der negative Ionenaustauscher aneinander geklebt sind und die wasserspaltenden Ionenaustauscher als Schichtaufbau hergestellt sind.

3. Warmwasserversorgungsvorrichtung nach Anspruch 1, wobei eine Wärmedämmung (17) um den Warmwasserspeicherbehälter vorgesehen ist.

4. Warmwasserversorgungsvorrichtung nach Anspruch 1, wobei die Wasser-enthärtungseinrichtung (30) nahe dem Warmwasserspeicherbehälter (11) angeordnet ist.

5. Warmwasserversorgungsvorrichtung nach Anspruch 1, wobei die Wasserenthärtungseinrichtung (30) nahe dem Wasser-Wärmetauscher (20) angeordnet ist.

## Revendications

1. Appareil d'alimentation en eau chaude comprenant
un réservoir de stockage (11) d'eau chaude, dans lequel est stockée de l'eau,
un circuit de pompe à chaleur possédant un compresseur (21), un échangeur de chaleur d'eau (22), un échangeur de chaleur d'air (23) et des tubes de réfrigérant qui connectent le compresseur, l'échangeur de chaleur d'eau et l'échangeur de chaleur d'air les uns avec les autres,
un tube d'évacuation (13) qui guide l'eau dans la partie inférieure du réservoir de stockage (11) d'eau chaude vers l'échangeur de chaleur d'eau (22),
un tube d'admission (14) qui retourne l'eau chauffée par l'échangeur de chaleur d'eau (22) dans la partie supérieure du réservoir de stockage (11) d'eau chaude,
un moyen (30) d'adoucissement de l'eau possédant au moins une paire d'électrodes, une paire d'échangeurs d'ions dissociateurs d'eau (33) possédant chacun un échangeur d'ions positifs et un échangeur d'ions négatifs, un circuit d'écoulement qui est en contact avec les échangeurs d'ions dissociateurs d'eau (33) et un orifice d'entrée et un orifice de sortie qui connectent le circuit d'écoulement avec le tube d'évacuation (13),
dans lequel
un tube de drainage (18) par lequel l'eau concentrée produite lorsque l'échangeur d'ions dissociateur d'eau (33) est restauré est écoulée des ramifications, au tube d'évacuation (13) du côté évacuation des moyens d'adoucissement de l'eau, et
une valve de commutation (19) qui commute le circuit d'écoulement vers le tube d'évacuation (13) ou vers le tube de drainage (18) est fournie à une partie ramifiée du tube d'évacuation (13) et du tube de drainage (18).

2. Appareil d'alimentation en eau chaude selon la revendication 1, dans lequel l'échangeur d'ions positifs et l'échangeur d'ions négatifs sont réalisés sous forme d'échangeurs (33) d'ions à membrane, l'échangeur d'ions positifs et l'échangeur d'ions négatifs sont collés l'un à l'autre et les échangeurs d'ions dissociateurs d'eau sont réalisés sous forme de structure à couches.

3. Appareil d'alimentation en eau chaude selon la revendication 1, dans lequel un isolant thermique (17) est fourni autour du réservoir de stockage d'eau chaude.

4. Appareil d'alimentation en eau chaude selon la revendication 1, dans lequel le moyen d'adoucissement d'eau (30) est disposé près du réservoir de stockage (11) d'eau chaude.

5. Appareil d'alimentation en eau chaude selon la revendication 1, dans lequel le moyen d'adoucissement d'eau (30) est disposé près de l'échangeur de chaleur (20) d'eau chaude.
